# EUROPÄISCHE PATENTSCHRIFT

(11) **EP 3 749 555 B1**
(45) Veröffentlichungstag und Bekanntmachung des Hinweises auf die Patenterteilung: **08.03.2023**
(21) Anmeldenummer: 19703953.0
(22) Anmeldetag: 23.01.2019
(51) Int. Cl.: B60T 3/00, B60P 3/077, B60P 3/36, B66F 7/24

(54) **AUFFAHRVORRICHTUNG**
LEVELING RAMP
CALE DE NIVELLEMENT

(30) Priorität: 06.02.2018 DE 102018102613
(43) Veröffentlichungstag der Anmeldung: 16.12.2020
(73) Patentinhaber: Fiamma S.p.A., 21010 Cardano al Campo (VA) (IT)
(72) Erfinder: POZZI, John-David, 8004 Zürich (CH); POZZI, Charles Philip, 20129 Mailand (IT)
(74) Vertreter: Kluin Patent
(86) Internationale Anmeldenummer: PCT/EP2019/051555
(87) Internationale Veröffentlichungsnummer: WO 2019/154621

(56) Entgegenhaltungen:
- DE-A1-102015 010 435
- DE-U1-202011 051 100
- GB-A- 2 501 314

## Beschreibung

Die Erfindung betrifft eine Auffahrvorrichtung für ein Fahrzeug.

Auffahrvorrichtungen sind bereits bekannt. Beispielsweise zeigt die DE 20 2011 051 100 U1 eine Auffahrvorrichtung.

Die DE 10 2015 010 435 A1 zeigt einen Unterlegkeil für ein Wagenrad, der eine Mehrzahl von Hohlstrukturelementen aufweist. Die Stirnseiten der Wände dieser Hohlstrukturelemente bilden die Reifenkontaktfläche.

Die GB 2 501 314 A zeigt einen Auffahrkeil, bei dem die Reifenkontaktfläche von einer durch Öffnungen unterbrochenen und im Übrigen geschlossenen Oberfläche des Keils bereitgestellt ist.

Nachteilig bei bekannten Auffahrvorrichtungen ist, dass ihre mechanische Widerstandsfähigkeit und/oder ihre Reifenkontaktfläche oft nicht optimal ist.

Die Erfindung hat es sich zur Aufgabe gemacht, eine Auffahrvorrichtung zu schaffen, welche zumindest hinsichtlich eines der genannten Nachteile verbessert ist.

Diese Aufgabe wird durch die in Anspruch 1 wiedergegebene Auffahrvorrichtung gelöst.

Die erfindungsgemäße Auffahrvorrichtung für ein Fahrzeug umfasst einen Auffahrkeil. Dieser wird im Rahmen dieser Druckschrift auch kurz als Keil bezeichnet.

Der Auffahrkeil weist eine Rampenseite und eine der Rampenseite gegenüberliegende Stützseite auf. Die Rampenseite weit eine Rampenoberfläche auf. Die Stützseite weist eine Stützoberfläche auf. Der Auffahrkeil umfasst mindestens eine zwischen der Rampenseite und der Stützseite verlaufende Rippe. Die Rippe kann auch als Steg bezeichnet werden. An dem der Rampenseite zugewandten Ende der Rippe ist mindestens ein Vorsprung vorgesehen, der zu der Rippe abgewinkelt angeordnet ist.

Auf diese Weise kann ein Keil bereitgestellt werden, der eine optimierte mechanische Widerstandsfähigkeit, insbesondere gegenüber Biegungsbelastung und Druckbelastung, aufweist und dessen Kontaktfläche mit einem Reifen eines Fahrzeugs eine optimale Größe aufweist. Zudem kann hierdurch ein Keil bereitgestellt werden, der flexibel genug ist, um sich unebenem Untergrund anpassen zu können, ohne Schaden zu nehmen.

Die Rampenoberfläche umfasst bevorzugt eine Fläche, die von dem mindestens einen Vorsprung bereitgestellt ist.

Die Rampenoberfläche und die Stützoberfläche sind bevorzugt voneinander weg weisend ausgebildet. Die Rampenseite ist bevorzugt dazu eingerichtet, mit einem Reifen des Fahrzeugs in Kontakt zu kommen, die Rampenoberfläche ist bevorzugt also als Reifenkontaktfläche ausgebildet. Die Stützseite ist bevorzugt dazu eingerichtet, mit dem Untergrund in Kontakt zu kommen. Die Stützoberfläche ist bevorzugt also als Untergrundkontaktfläche ausgebildet. Bei ordnungsgemäßer Benutzung ist die Stützseite also bevorzugt bodennah. Die Rampenseite ist bevorzugt so ausgeführt, dass sie eine Anhebung eines Reifens des Fahrzeugs in unterschiedliche Höhenlagen ermöglicht.

Bevorzugt steht der mindestens eine Vorsprung frei von der Rippe hervor. Der mindestens Vorsprung weist bevorzugt also ein freies Ende auf. Auf diese Weise ist eine Voraussetzung für eine besonders geeignete Oberflächenbeschaffenheit der Rampenseite des Keils geschaffen.

Der mindestens eine Vorsprung weist bevorzugt ein Stützelement auf, welches ihn gegenüber der Rippe abstützt. Hierdurch wird die Belastbarkeit des Vorsprungs erhöht. Bei diesem Stützelement handelt es sich bevorzugt nicht um eine Rippe. Das Stützelement stützt bevorzugt das freie Ende des Vorsprungs an der Rippe, von der der Vorsprung vorsteht, ab.

Der mindestens eine Vorsprung stützt sich bevorzugt nicht an mehr als genau eine Rippe ab. Der Vorsprung verbindet bevorzugt die Rippe nicht mit einer gegenüberliegenden Rippe.

Bevorzugt ist der mindestens eine Vorsprung zu der Rippe um etwa 90° abgewinkelt.

Der mindestens eine Vorsprung weist, von der Rampenseite her betrachtet, zumindest in etwa eine Dreiecksform auf.

Bevorzugt dient die Auffahrvorrichtung für ein Reifen aufweisendes Fahrzeug, insbesondere für ein Reisemobil oder für einen Wohnwagen. Die Auffahrvorrichtung dient bevorzugt zum Nivellieren eines Höhenunterschieds, bevorzugt um das Fahrzeug auch bei einem unebenen Untergrund horizontal ausrichten zu können. Der Auffahrkeil ist bevorzugt transportabel.

Die mindestens eine Rippe verläuft bevorzugt zumindest nahezu von der Stützseite bis zur Rampenseite. Bevorzugt entspricht die Höhe der Rippe zumindest nahezu der jeweiligen Höhe des Keils. Hierdurch kann sie besonders effektiv zur Stabilität des Auffahrkeils beitragen.

Mit dem Begriff "Höhe der Rippe" wird im Rahmen dieser Druckschrift insbesondere die Größe der Rippe in Richtung der Höhe des Keils bezeichnet. Mit dem Begriff "Länge der Rippe" wird im Rahmen dieser Druckschrift insbesondere die Längserstreckung der Rippe senkrecht zu ihrer Höhe bezeichnet.

Die mindestens eine Rippe verläuft bevorzugt senkrecht zur Stützseite. Auf diese Weise kann sie besonders effektiv zur Stabilität des Keils beitragen.

Bevorzugt sind mehrere Rippen vorgesehen. Bevorzugt kreuzen sich die Rippen an Kreuzungspunkten. Bevorzugt sind mehrere Vorsprünge vorgesehen.

Die Stützoberfläche ist bevorzugt größer, als die Gesamtquerschnittsfläche der Rippen. Bevorzugt ist die Stützoberfläche mehr als 10 % oder mehr als 20 % oder mehr als 25 % oder mehr als 35 % oder mehr als 40 % größer, als die Gesamtquerschnittsfläche der Rippen. Mit dem Begriff "Gesamtquerschnittsfläche der Rippen" ist im Rahmen dieser Druckschrift die Gesamtquerschnittsfläche aller Rippen bei einem parallel zur Stützseite verlaufenden Querschnitt gemeint. Hierdurch wird einem Einsinken des Keils in weichem Untergrund entgegengewirkt. Die Stützoberfläche ist bevorzugt kleiner, als die Bezugsstützfläche des Keils. Bevorzugt ist die Stützoberfläche mehr als 10 % oder mehr als 20 % oder mehr als 25 % oder mehr als 35 % oder mehr als 40 % kleiner, als die Bezugsstützfläche des Keils. Mit dem Begriff "Bezugsstützfläche" wird im Rahmen dieser Druckschrift das Produkt aus Länge und Breite der Stützseite des Keils bezeichnet. Auf diese Weise ist eine Voraussetzung für einen leichten Keil geschaffen, der sich gut dem Untergrund anpassen kann.

Bevorzugt ist die Stützoberfläche teilweise geschlossen ausgebildet. Auf diese Weise kann ein Kompromiss gefunden werden, zur Bereitstellung einer Stützoberfläche, die groß genug ist, um das Gewicht des Fahrzeugs über eine Fläche zu so verteilen, dass ein Absinken in den Boden in den meisten Fällen vermieden ist und die andererseits dazu beitragen kann, dass der Auffahrkeil flexibel genug ist, um sich unebenem Untergrund anpassen zu können, ohne Schaden zu nehmen. Durch die teilweise geschlossene Stützoberfläche kann der Keil vor dem Absinken in weichem Untergrund bewahrt werden, und dennoch eine hohe Widerstandsfähigkeits-Eigenschaft gegen mechanische Belastung - etwa durch das Gewicht des Fahrzeugs - aufweisen.

Die teilweise geschlossene Stützoberfläche ist bevorzugt so ausgeführt, dass geschlossene und offene Bereiche der Stützseite vorgesehen sind, die weiter bevorzugt gleichmäßig über die Stützseite verteilt sind, etwa schachbrettartig. Die geschlossenen Bereiche können mit Ausnahme von Öffnungen, etwa zum Regenwasserablauf, geschlossen sein.

Bevorzugt sind - über die Länge des Keils betrachtet - in seinem mittleren Bereich mehrere Rippen mit einer ersten Länge vorgesehen. Bevorzugt sind im vorderen und weiter bevorzugt im hinteren Bereich des Keils Rippen mit einer zweiten Länge vorgesehen, die bevorzugt kürzer ist, als die erste Länge. Bevorzugt verläuft mindestens eine Rippe von einer Seite des Keils zur anderen Seite des Keils, weiter bevorzugt ungekrümmt. Bevorzugt verlaufen alle Rippen, die die erste Länge aufweisen, von einer Seite des Keils zur anderen Seite des Keils, weiter bevorzugt ungekrümmt.

Bevorzugt sind erste, parallel zueinander verlaufende Rippen vorgesehen und zweite, parallel zueinander verlaufende Rippen, wobei die ersten Rippen nicht parallel zu den zweiten Rippen verlaufen, sondern erste und zweite Rippen einander schneiden. Die ersten und zweiten Rippen können sich in einem Winkel von etwa 90° schneiden. Bevorzugt verlaufen die ersten Rippen nicht in Auffahrrichtung, sondern - von unten betrachtet im Uhrzeigersinn - im 45° Winkel hierzu. Bevorzugt verlaufen die zweiten Rippen nicht in Auffahrrichtung, sondern - von unten betrachtet gegen den Uhrzeigersinn - im 45° Winkel hierzu.

Die Rippen - bevorzugt die ersten und zweiten Rippen - bilden zwischen sich bevorzugt eine sich wiederholende Form, besonders bevorzugt eine Rautenform, aus.

Jede Rippe weist bevorzugt mehrere zu ihr abgewinkelte Vorsprünge auf.

Die Vorsprünge erstrecken sich vorzugsweise jeweils von einem Kreuzungspunkt der Rippe bis zu dem nächsten Kreuzungspunkt.

Jeder Vorsprung erstreckt sich von der zugehörigen Rippe bevorzugt in einer Vorsprungsrichtung. Bevorzugt unterscheiden sich die Vorsprungrichtungen von benachbarten Vorsprüngen derselben Rippe. Besonders bevorzugt weisen benachbarte Vorsprünge einer Rippe entgegengesetzte Vorsprungsrichtungen auf.

Die Rampenseite weist bevorzugt mehrere Öffnungen auf. Bevorzugt reduzieren diese Öffnungen die Größe der Rampenoberfläche.

In der bevorzugten Ausführungsform ist die Rampenoberfläche kleiner als die Bezugsrampenfläche. Bevorzugt ist die Rampenoberfläche mehr als 50 % oder mehr als 70% oder mehr als 80 % oder mehr als 90 % kleiner, als die Bezugsrampenfläche. Mit dem Begriff "Bezugsrampenfläche" wird im Rahmen dieser Druckschrift das Produkt aus Breite und Länge der Rampenseite bezeichnet. Auf diese Weise kann die Haftreibung zwischen einem Reifen und dem Keil erhöht werden, indem beispielsweise eine zumindest partielle Verzahnung zwischen Rampenoberfläche und dem Profil des Reifens möglich wird und es ist eine Voraussetzung dafür geschaffen, das Gesamtgewicht sowie den Materialaufwand des Keils zu verringern. Bevorzugt ist die Rampenoberfläche um weniger als 95 % kleiner, als die Bezugsrampenfläche. Auf diese Weise werden auf den Reifen des Fahrzeugs bei dem Befahren oder bei dem Stehen auf dem Keil wirkende Druckspitzen vermieden und der Reifen geschont.

In der bevorzugten Ausführungsform ist die Rampenoberfläche größer als die Gesamtquerschnittsfläche der Rippen, bevorzugt zumindest auch aufgrund der Vorsprünge. Bevorzugt ist die Rampenoberfläche mehr als 5 % oder mehr als 10 % oder mehr als 20 % oder mehr als 25 % oder mehr als 35 % größer, als die Gesamtquerschnittsfläche der Rippen. Auf diese Weise werden auf den Reifen des Fahrzeugs bei dem Befahren oder bei dem Stehen auf dem Keil wirkende Druckspitzen vermieden und der Reifen geschont.

Die Rampenseite weist bevorzugt mehrere Öffnungen auf, die bevorzugt die Gröβe der Rampenoberfläche reduzieren und die weiter bevorzugt durch den gesamten Keil hindurchreichen. Diese Öffnungen werden im Rahmen dieser Druckschrift auch als "Durchgangsöffnungen" bezeichnet. Bevorzugt weisen die Durchgangsöffnungen jeweils keine gleichmäßige Größe auf, sondern ihre Größe ist vorzugsweise im Bereich der Rampenseite durch die Vorsprünge reduziert. In der bevorzugten Ausführungsform beträgt die durch die Durchgangsöffnungen bewirkte Reduktion der Rampenoberfläche mehr als 5 % oder mehr als 10 % oder mehr als 15 % oder mehr als 20 % oder mehr als 25 % oder mehr als 30 % oder mehr als 35 % oder mehr als 40% der Bezugsrampenfläche. In der bevorzugten Ausführungsform beträgt die durch die Durchgangsöffnungen bewirkte Reduktion der Rampenoberfläche weniger als 50 % oder 40 % oder 30 % oder 20% oder 10 % der Bezugsrampenfläche. Durch die Durchgangsöffnungen reduziert sich das Gewicht des Keils und der Materialaufwand. Es hat sich gezeigt, dass Durchgangsöffnungen in erheblicher Größe möglich sind, ohne die Stabilität des Keils zu gefährden.

In der bevorzugten Ausführungsform sind nicht durch den gesamten Keil hindurchgehende Öffnungen der Rampenseite und Durchgangsöffnungen der Rampenseite vorgesehen, vorzugsweise gleichmäßig über die Rampenseite verteilt.

Bevorzugt weisen mehrere Öffnungen der Rampenseite die gleiche Form auf. Bevorzugt sind mindestens zwei verschiedene Formen dieser Öffnungen vorgesehen.

Die Rampenseite weist bevorzugt mehrere rautenförmige und mehrere sternförmige Öffnungen auf.

Bevorzugt sind an den Rändern der Rampenseite angeordnete Öffnungen der Rampenseite vorgesehen und nicht an den Rändern der Rampenseite angeordnete, also mittig angeordnete Öffnungen. Die Form der randseitigen Öffnungen kann sich von der Form der mittig angeordneten Öffnungen unterscheiden. Bevorzugt weisen bereits die mittig angeordneten Öffnungen mindestens zwei verschiedene Formen auf.

Bevorzugt weist die Rampenseite Öffnungen auf, die durch die Rippen begrenzt werden. Diese durch die Rippen begrenzten Öffnungen reichen bevorzugt nicht durch den gesamten Keil hindurch. Bevorzugt sind sie oberhalb der geschlossenen Bereiche der vorzugsweise teilweise geschlossenen Stützoberfläche angeordnet. Die durch die Rippen begrenzten Öffnungen der Rampenseite sind in einer wichtigen Ausführungsform rautenförmig.

Bevorzugt weist die Rampenseite Öffnungen auf, die teilweise oder ausschließlich durch die Vorsprünge begrenzt werden. Diese teilweise oder ausschließlich durch die Vorsprünge begrenzten Öffnungen reichen bevorzugt durch den gesamten Keil hindurch. Sie sind bevorzugt oberhalb der offenen Bereiche der vorzugsweise teilweise geschlossenen Stützoberfläche angeordnet. Die durch die Vorsprünge begrenzten Öffnungen sind in einer wichtigen Ausführungsform sternförmig.

Die Öffnungen der Rampenseite sind bevorzugt so geformt und weiter bevorzugt so angeordnet, dass sich auf der Rampenseite ein Muster aus Sternen, durchsetzt mit Rauten, ergibt.

Hierdurch kann die mechanische Widerstandsfähigkeit des Auffahrkeils, insbesondere gegenüber Biegung und Druck, optimiert sein und es kann die Größe der Berührungsfläche mit dem Reifen optimiert sein.

Die Sternenform ist bevorzugt als vierstrahliger Stern ausgebildet. Jeweils zwei Strahlen der Sternenform weisen bevorzugt in gegenüberliegende Richtungen. Zwei benachbarte Strahlen stehen bevorzugt zueinander senkrecht. Die Strahlen verjüngen sich bevorzugt zu ihrem Ende hin.

Die Summe aus Rampenoberfläche und Stützoberfläche ist bevorzugt kleiner, als die Bezugsstützfläche des Keils, bevorzugt zumindest auch aufgrund der Durchgangsöffnungen. Auf diese Weise ist eine Voraussetzung für einen leichten Keil geschaffen, der sich gut dem Untergrund anpassen kann. Die Summe aus Rampenoberfläche und Stützoberfläche ist bevorzugt um mehr als 5 % oder mehr als 10 % oder mehr als 20 % oder mehr als 30 % oder mehr als 40 % oder mehr als 50 % kleiner, als die Bezugsstützfläche des Keils.

In der bevorzugten Ausführungsform weist der Auffahrkeil mehrere Stufen in verschiedenen Höhen auf. Weiter bevorzugt sind die Stufen gekrümmt. Anders ausgedrückt weist die Rampenseite im Bereich der Stufen bevorzugt eine konkave Oberfläche auf.

Die Krümmung der Stufen kann zu einer Verbesserung des Kontakts mit dem Reifen führen.

Es können genau drei verschiedene Stufen in verschiedenen Höhen vorgesehen sein. Die Stufen können die folgenden Höhen aufweisen: etwa 60 mm, etwa 120 mm und etwa 170 mm. Es kann auch eine andere Anzahl an Stufen, etwa genau vier, vorgesehen sein.

Bevorzugt sind Elemente zur Verbesserung der Haftung auf der Rampenoberfläche vorgesehen. Die Elemente dienen bevorzugt insbesondere der Verbesserung der Haftung eines rollenden Reifens des Fahrzeugs auf der Rampenseite, vermeiden beispielsweise also ein Durchdrehen eines Reifens. Die Elemente können Zähne umfassen, die von der Rampenseite weg weisen. Die Elemente können an den Vorsprüngen angeordnet sein. Bevorzugt sind die Elemente nicht gleichmäßig über die Rampenseite verteilt angeordnet, sondern weiter bevorzugt vermehrt zwischen den Stufen angeordnet.

Bevorzugt weist der Auffahrkeil eine Rückseite auf, die zur Rampenseite hin geneigt ist. Durch die geneigte Rückseite kann die Stabilität des Auffahrkeils verbessert werden.

In der bevorzugten Ausführungsform ist an der Rückseite des Auffahrkeils ein Griff angeordnet. Durch den Griff kann der Transport des Auffahrkeils erleichtert und die Positionierung des Auffahrkeils nahe am Rad des Fahrzeugs vereinfacht sein.

In der bevorzugten Ausführungsform weist der Auffahrkeil Seitenwände auf und in diesen Seitenwänden sind bevorzugt Vertiefungen angeordnet.

Die Vertiefungen erstrecken sich bevorzugt in Richtung der Höhe des Auffahrkeils und weiter bevorzugt über die gesamte jeweilige Höhe des Auffahrkeils. Die Vertiefungen sind bevorzugt gerundet und weisen weiter bevorzugt einen etwa halbkreisförmigen Querschnitt auf. Ihr Querschnitt kann sich in Richtung auf die Rampenseite zu vergrößern.

Die Auffahrvorrichtung kann durch den Auffahrkeil gebildet sein.

Der Auffahrkeil kann einstückig ausgebildet sein.

Der Auffahrkeil umfasst bevorzugt Kunststoff oder ist aus Kunststoff gebildet.

Der Keil ist bevorzugt für Fahrzeuge mit einer maximalen Reifenbreite von etwa 245 mm nutzbar.

Die maximale Belastbarkeit des Keils beträgt bevorzugt etwa 2500 kg.

Die Erfindung soll nun anhand eines in den Zeichnungen gezeigten Ausführungsbeispiels näher erläutert werden. Es zeigen:
- Fig. 1: eine perspektivische Darstellung eines Ausführungsbeispiels einer erfindungsgemäßen Auffahrvorrichtung;
- Fig. 2: eine Seitendarstellung der Auffahrvorrichtung von Fig. 1;
- Fig. 3: eine Darstellung wie in Fig. 2;
- Fig. 4: ein Detail aus Fig. 2 den vergrößerten Maßstab;
- Fig. 5: eine Ansicht von oben auf die Auffahrvorrichtung von Fig. 1;
- Fig. 6: ein weiteres Detail aus Fig. 2 in vergrößerten Maßstab;
- Fig. 7: eine perspektivische Darstellung der Auffahrvorrichtung von Fig. 1 mit Blick von unten;
- Fig. 8: einen Ausschnitt einer perspektivischen Darstellung der Auffahrvorrichtung von Fig. 1 mit Blick von schräg hinten.

Das gezeigte und als Ganzes mit 100 bezeichnete Ausführungsbeispiel der erfindungsgemäßen Auffahrvorrichtung ist durch einen einstückigen transportablen Auffahrkeil 1 gebildet. Die gezeigte Auffahrvorrichtung ist für ein Fahrzeug, nämlich ein Reisemobil oder einen Wohnwagen ausgebildet, zum Nivellieren eines Höhenunterschieds, um das Fahrzeug auch bei einem unebenen Untergrund horizontal ausrichten zu können.

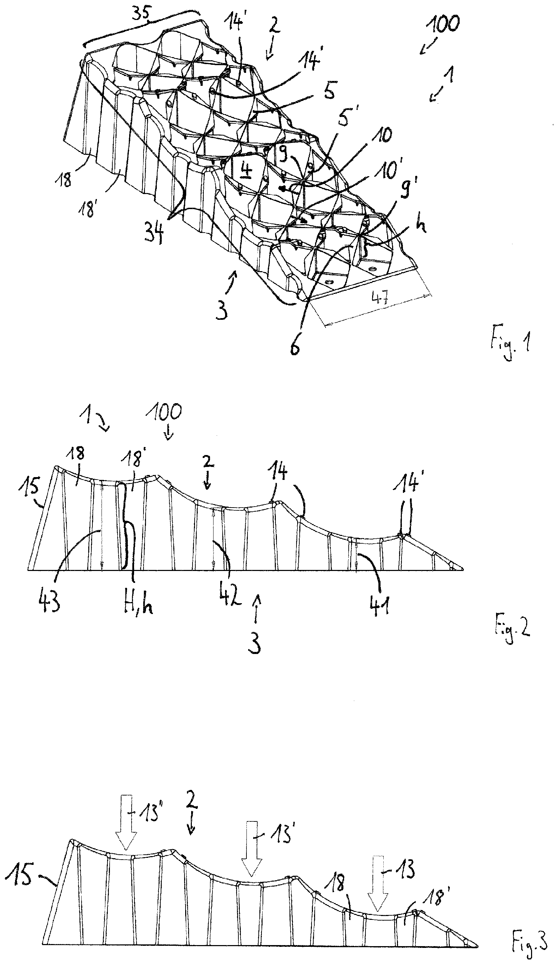

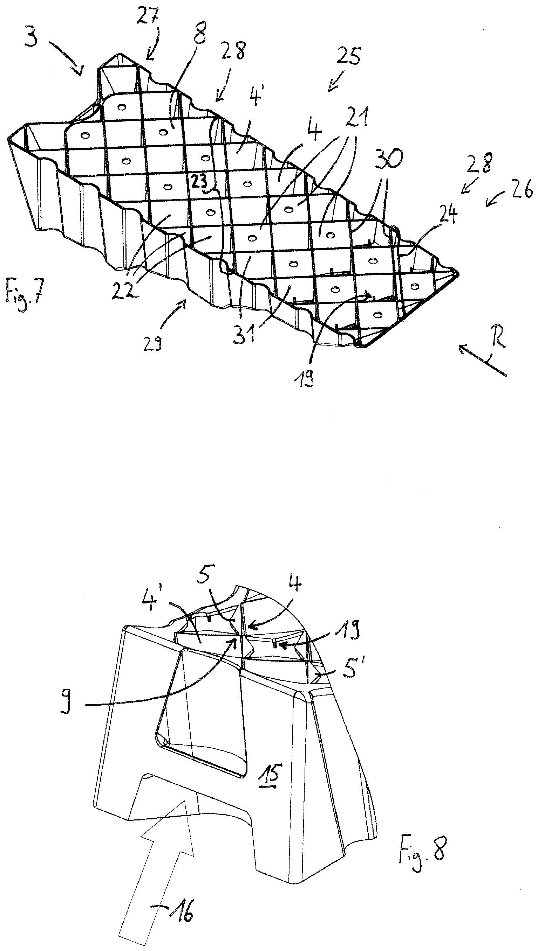

Wie etwa die Figuren 1 und 2 zeigen, weist der Auffahrkeil 1 eine Rampenseite 2 und eine der Rampenseite 2 gegenüberliegende Stützseite 3 auf. Es ist mindestens eine zwischen der Rampenseite 2 und der Stützseite 3 verlaufende Rippe 4 vorgesehen, genauer gesagt sind mehrere derartige Rippen 4, 4' vorgesehen (siehe etwa Fig. 7).

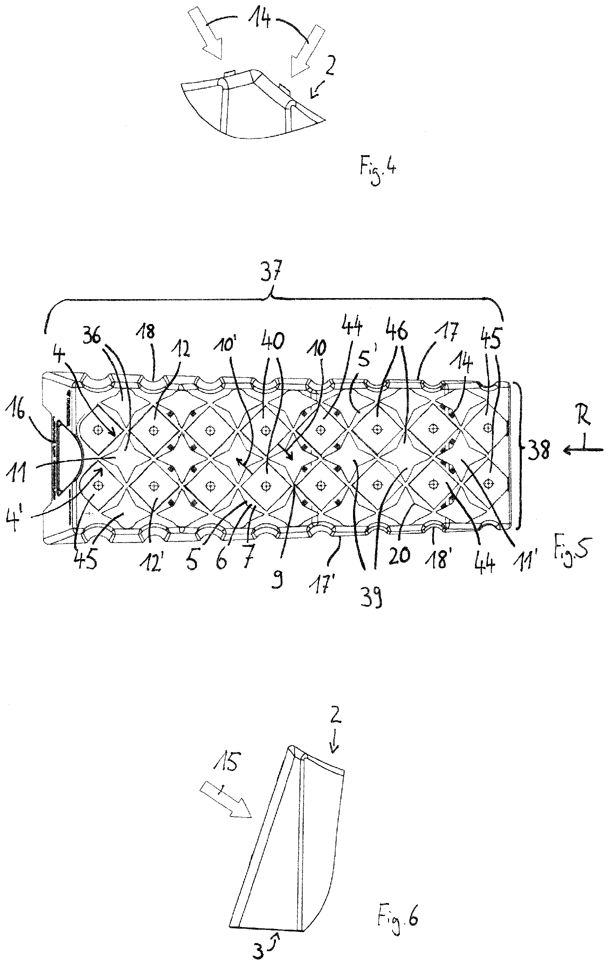

Wie etwa in den Figuren 1 und 5 gezeigt, ist an dem der Rampenseite 2 zugewandten Ende der Rippen 4, 4' mindestens ein Vorsprung 5 vorgesehen, der zu der Rippe 4 abgewinkelt angeordnet ist. Wie die Figuren zeigen, sind mehrere derartige Vorsprünge 5, 5'vorgesehen.

Die Rampenseite 2 weist eine Rampenoberfläche 6 auf und etwa Fig. 5 zeigt, dass die Rampenoberfläche 6 eine Fläche 7 umfasst, die von diesen Vorsprüngen 5, 5' bereitgestellt ist.

Jeder Vorsprung 5, 5' erstreckt sich von der zugehörigen Rippe 4, 4' in einer Vorsprungsrichtung 10, 10' (Fig. 5). Benachbarte Vorsprünge 5, 5' einer Rippe 4, 4' weisen entgegengesetzte Vorsprungsrichtungen 10, 10' auf.

Die Vorsprünge 5, 5' stehen frei hervor und weisen jeweils ein freies Ende 20 auf.

Die Vorsprünge 5, 5' weisen jeweils ein Stützelement 19 auf, welches sie, genauer gesagt ihr freies Ende 20, gegenüber der Rippe 4 abstützt (siehe etwa Figuren 7 und 8). Die Vorsprünge stützen sich nicht an mehr als genau einer Rippe ab. Die Vorsprünge verbinden die Rippe, von der sie vorspringen, nicht mit einer gegenüberliegenden Rippe. Die Vorsprünge sind zu der Rippe, von der sie vorspringen, jeweils um etwa 90° abgewickelt.

Fig. 7 zeigt, dass die Stützseite 3 eine teilweise geschlossene Stützoberfläche 8 aufweist, mit gleichmäßig, etwa schachbrettartig verteilten geschlossenen Bereichen 21 und offenen Bereichen 22. Die geschlossenen Bereiche 21 weisen im gezeigten Ausführungsbeispiel Öffnungen in Form von kreisrunden Löchern auf, etwa zum Regenwasserablauf.

Die Stützoberfläche 8 ist aufgrund der geschlossenen Bereiche 21 größer, als die Gesamtquerschnittsfläche der Rippen 4, 4'. Die Stützoberfläche 21 ist aufgrund der offenen Bereiche 22 kleiner, als die Bezugsstützfläche des Keils 1.

Die Rippen verlaufen senkrecht zur Stützseite 3 von der Stützseite 3 bis zur Rampenseite 2. Die Höhe h der Rippen entspricht der jeweiligen Höhe H des Keils.

Es sind - über die Länge des Keils betrachtet - in seinem mittleren Bereich 25 mehrere Rippen mit einer ersten Länge 23 vorgesehen. Im vorderen Bereich 26 und im hinteren Bereich 27 des Keils sind Rippen mit einer zweiten Länge 24 vorgesehen, die kürzer ist, als die erste Länge. Alle Rippen, die die erste Länge 23 aufweisen, verlaufen ungekrümmt von einer Seite 28 des Keils zur anderen Seite 29 des Keils.

Es sind erste, parallel zueinander verlaufende Rippen 30 vorgesehen und zweite, ebenfalls parallel zueinander verlaufende Rippen 31, wobei die ersten Rippen 30 nicht parallel zu den zweiten Rippen 31 verlaufen, sondern diese schneiden und zwar in einem Winkel von etwa 90°. Die Rippen verlaufen nicht in Auffahrrichtung R, sondern die ersten Rippen 30 verlaufen - von unten betrachtet im Uhrzeigersinn - in einem Winkel von etwa 45° hierzu. Die zweiten Rippen 31 verlaufen ebenfalls nicht in Auffahrrichtung R, sondern - von unten betrachtet gegen den Uhrzeigersinn - in einem Winkel von etwa 45° hierzu.

Die Rippen 4, 4' schneiden sich an Kreuzungspunkten 9, 9'. Die Vorsprünge 5, 5' erstrecken sich jeweils von einem Kreuzungspunkt 9 bis zum nächsten Kreuzungspunkt 9'. Die Richtung 10, in die die Vorsprünge von ihren Rippen vorspringen, ist bei benachbarten Vorsprüngen derselben Rippe entgegengesetzt (siehe etwa Fig. 5).

Die Vorsprünge 5, 5 'weisen, von der Rampenseite hier betrachtet, zumindest in etwa eine Dreiecksform auf.

Etwa die Fig. 1 und 5 zeigen, dass die Rampenseite 2 mehrere Öffnungen 11, 11', 12, 12' aufweist. Genauer gesagt sind mehrere rautenförmige Öffnungen 12, 12' und mehrere durch die Vorsprünge 5, 5' begrenzten sternförmige Öffnungen 11, 11' der Rampenseite 2 vorgesehen und diese Öffnungen 11, 11', 12, 12' sind so angeordnet, dass sich auf der Rampenseite 2 ein Muster aus Sternen 39, durchsetzt mit Rauten 40, ergibt. Die Sternenform ist als vierstrahliger Stern ausgebildet. Jeweils zwei Strahlen der Sternenform weisen in gegenüberliegende Richtungen. Zwei benachbarte Strahlen stehen zueinander senkrecht. Die Strahlen verjüngen sich zu ihrem Ende hin. Die sternenförmigen Öffnungen 11, 11' sind als Durchgangsöffnungen 36 ausgebildet. Die rautenförmigen Öffnungen 12, 12' sind als nicht durch den gesamten Keil hindurchreichende Öffnungen 44 ausgebildet. Die Rampenoberfläche 6 ist aufgrund der Öffnungen 11, 11', 12, 12' der Rampenseite 2 kleiner als die Bezugsrampenfläche. Die Rampenoberfläche 6 ist insbesondere aufgrund der Vorsprünge 5, 5' größer als die Gesamtquerschnittsfläche der Rippen.

Die nicht durch den gesamten Keil hindurchgehenden Öffnungen 44 der Rampenseite und die Durchgangsöffnungen 36 der Rampenseite sind gleichmäßig über die Rampenseite 2 verteilt.

Es sind an den Rändern der Rampenseite 2 angeordnete Öffnungen 45 der Rampenseite vorgesehen und nicht an den Rändern der Rampenseite angeordnete, also mittige Öffnungen 46, deren Form sich von der Form der mittigen Öffnungen unterscheidet. Bereits die mittigen Öffnungen 46 weisen zwei verschiedene Formen auf, nämlich die Rautenform und die Sternenform.

Die mittigen rautenförmigen Öffnungen 12, 12' der Rampenseite sind durch die Rippen 4, 4' begrenzt und reichen nicht durch den gesamten Keil 1 hindurch. Sie sind oberhalb der geschlossenen Bereiche 21 der Stützoberfläche 8 angeordnet.

Die mittigen sternförmigen Öffnungen 11, 11' der Rampenseite werden auf der Rampenseite durch die Vorsprünge 5, 5' begrenzt. Sie sind oberhalb der offenen Bereiche 22 der teilweise geschlossenen Stützoberfläche 8 angeordnet. Sie sind als Durchgangsöffnungen 36 ausgeführt, stellen auf der Stützseite die offenen Bereiche 22 bereit und werden auf der Stützseite durch die Rippen 4, 4' begrenzt.

Die Summe aus Rampenoberfläche 6 und Stützoberfläche 8 ist kleiner, als die Bezugsstützfläche des Keils 1.

Etwa Fig. 3 zeigt, dass der Auffahrkeil 1 mehrere Stufen 13, 13', 13" in verschiedenen Höhen 41, 42, 43 aufweist und die Stufen gekrümmt sind. Die erste Höhe 41 kann etwa 60 mm, die zweite Höhe 42 etwa 120 mm und die dritte Höhe 43 etwa 170 mm aufweisen.

Insbesondere Fig. 4 zeigt, dass Elemente 14, 14' zur Verbesserung der Haftung eines Reifens auf der Rampenseite 2 vorgesehen sind. Die Elemente umfassen Zähne, die von der Rampenseite 2 weg weisen. Die Zähne sind an den Vorsprüngen 5, 5'angeordnet. Sie sind nicht gleichmäßig über die Rampenseite 2 verteilt angeordnet, sondern vermehrt zwischen den Stufen 13, 13', 13" angeordnet.

Vor allem Fig. 6 zeigt, dass der Auffahrkeil 1 eine Rückseite 15 aufweist, die zur Rampenseite 2 hin geneigt ist. An der Rückseite 15 ist ein Griff 16 angeordnet, der in Fig. 8 gut zu erkennen ist.

Der Auffahrkeil 1 weist Seitenwände 17, 17' auf und in diesen Seitenwänden sind Vertiefungen 18, 18' angeordnet, die sich über die gesamte Höhe H des Auffahrkeils 1 erstrecken. Die Vertiefungen 18, 18' erstrecken sich bevorzugt in Richtung der Höhe H des Auffahrkeils und weiter bevorzugt über die gesamte jeweilige Höhe H des Auffahrkeils. Die Vertiefungen 18, 18'sind gerundet und weisen einen etwa halbkreisförmigen Querschnitt auf. Sie vergrößern sich in Richtung auf die Rampenseite 2 zu.

Die Breite 35 der Rampenseite kann zwischen 260 und 230 mm liegen und etwa 245 mm betragen. Die Länge 34 der Rampenseite ist in Fig. 1 gezeigt. Die Länge 37 und Breite 38 der Stützseite 3 sind in Fig. 5 gezeigt. Die maximale Reifenbreite 47 ist in Fig. 1 gezeigt.

### Bezugszeichenliste:

- 100: Auffahrvorrichtung
- 1: Auffahrkeil
- 2: Rampenseite
- 3: Stützseite
- 4, 4': Rippen
- 5, 5': Vorsprung
- 6: Rampenoberfläche
- 7: von Vorsprung bereitgestellte Fläche der Rampenoberfläche
- 8: Stützoberfläche
- 9, 9': Kreuzungspunkte
- 10, 10': Vorsprungsrichtung
- 11, 11': Öffnungen
- 12, 12': Öffnungen
- 13, 13', 13': Stufen
- 14, 14': Elemente zur Verbesserung der Haftung
- 15: Rückseite
- 16: Griff
- 17, 17': Seitenwände
- 18, 18': Vertiefungen
- 19: Stützelement des Vorsprungs
- 20: freies Ende des Vorsprungs
- 21: geschlossene Bereiche der Stützseite
- 22: offene Bereiche der Stützseite
- 23: erste Länge der Rippen
- 24: zweite Länge der Rippen
- 25: mittlerer Bereich des Auffahrkeils
- 26: vorderer Bereich des Auffahrkeils
- 27: hinterer Bereich des Auffahrkeils
- 28: eine Seite des Auffahrkeils
- 29: andere Seite des Auffahrkeils
- 30: erste Rippen
- 31: zweite Rippen
- 32: -
- 33: -
- 34: Länge der Rampenseite
- 35: Breite der Rampenseite
- 36: Durchgangsöffnungen
- 37: Länge der Stützseite
- 38: Breite der Stützseite
- 39: Sterne
- 40: Rauten
- 41: erste Höhe
- 42: zweite Höhe
- 43: dritte Höhe
- 44: nicht durch den gesamten Keil hindurchgehende Öffnungen
- 45: an den Rändern der Rampenseite angeordnete Öffnungen
- 46: mittige Öffnungen
- 47: maximale Reifenbreite

- h: Höhe der Rippe
- H: Höhe des Keils
- R: Auffahrrichtung

## Patentansprüche

1. Auffahrvorrichtung (100) für ein Fahrzeug
mit einem Auffahrkeil (1),
der eine Rampenseite (2) mit einer Rampenoberfläche (6) und eine der Rampenseite (2) gegenüberliegende Stützseite (3) mit einer Stützoberfläche (8) aufweist
sowie mindestens eine zwischen der Rampenseite (2) und der Stützseite (3) verlaufende Rippe (4, 4'),
**dadurch gekennzeichnet, dass** an dem der Rampenseite (2) zugewandten Ende der Rippe (4, 4') mindestens ein zu der Rippe (4, 4') abgewinkelter Vorsprung (5, 5') vorgesehen ist.

2. Auffahrvorrichtung nach Anspruch 1, **dadurch gekennzeichnet, dass** die Stützoberfläche (8) teilweise geschlossen ausgebildet ist.

3. Auffahrvorrichtung nach Anspruch 1 oder 2, **dadurch gekennzeichnet, dass** mehrere Rippen (4, 4') und mehrere Vorsprünge (5, 5') vorgesehen sind.

4. Auffahrvorrichtung nach Anspruch 3, **dadurch gekennzeichnet, dass** die Rampenseite (2) mehrere Öffnungen (11, 11', 12, 12') aufweist.

5. Auffahrvorrichtung (100) nach Anspruch 4, **dadurch gekennzeichnet, dass** mehrere rautenförmige Öffnungen (12, 12') und mehrere durch die Vorsprünge (5, 5') begrenzte sternförmige Öffnungen (11, 11') der Rampenseite (2) vorgesehen sind und diese Öffnungen (11, 11', 12, 12') so angeordnet sind, dass sich auf der Rampenseite (2) ein Muster aus Sternen (39), durchsetzt mit Rauten (40), ergibt.

6. Auffahrvorrichtung (100) nach einem der Ansprüche 1 bis 5, **dadurch gekennzeichnet, dass** der Auffahrkeil (1) mehrere Stufen (13, 13', 13") in verschiedenen Höhen (41, 42, 43) aufweist.

7. Auffahrvorrichtung nach Anspruch 6, **dadurch gekennzeichnet, dass** die Stufen (13, 13', 13'') gekrümmt sind.

8. Auffahrvorrichtung nach einem der Ansprüche 1 bis 7, **dadurch gekennzeichnet, dass** Elemente (14, 14') zur Verbesserung der Haftung auf der Rampenoberfläche (6) vorgesehen sind.

9. Auffahrvorrichtung nach einem der Ansprüche 1 bis 8, **dadurch gekennzeichnet, dass** der Auffahrkeil (1) eine Rückseite (15) aufweist, die zur Rampenseite (2) hin geneigt ist und an der Rückseite (15) ein Griff (16) angeordnet ist.

10. Auffahrvorrichtung nach einem der Ansprüche 1 bis 9, **dadurch gekennzeichnet, dass** der Auffahrkeil (1) Seitenwände (17, 17') aufweist und in diesen Seitenwänden Vertiefungen (18, 18') angeordnet sind, die sich über die gesamte Höhe (H) des Auffahrkeils (1) erstrecken.

## Claims

1. A leveling ramp (100) for a vehicle
having a leveler (1),
which has a ramp side (2) having a ramp surface (6)
and a support side (3) opposite the ramp side (2) having a support surface (8)
and at least one rib (4, 4') extending between the ramp side (2) and the support side (3),
**characterized in that** at least one projection (5, 5') angled with respect to the rib (4, 4') is provided on the end of the rib (4, 4') facing the ramp side (2).

2. The leveling ramp according to claim 1, **characterized in that** the support surface (8) is partly closed.

3. The leveling ramp according to claim 1 or 2, **characterized in that** a plurality of ribs (4, 4') and a plurality of projections (5, 5') are provided.

4. The leveling ramp according to claim 3, **characterized in that** the ramp side (2) has a plurality of openings (11, 11', 12, 12').

5. The leveling ramp (100) according to claim 4, **characterized in that** a plurality of diamond-shaped openings (12, 12') and a plurality of star-shaped openings (11, 11'), delimited by the projections (5, 5'), of the ramp side (2) are provided and said openings (11, 11', 12, 12') are arranged such that a pattern of stars (39), interspersed with diamonds (40), is obtained on the ramp side (2).

6. The leveling ramp (100) according to any of claims 1 to 5,
**characterized in that** the leveler (1) has a plurality of steps (13, 13', 13") at different heights (41, 42, 43).

7. The leveling ramp according to claim 6, **characterized in that** the steps (13, 13', 13") are curved.

8. The leveling ramp according to any of claims 1 to 7, **characterized in that** elements (14, 14') for improving the adhesion are provided on the ramp surface (6).

9. The leveling ramp according to any of claims 1 to 8, **characterized in that** the leveler (1) has a rear side (15) that is inclined toward the ramp side (2) and a handle (16) is arranged on the rear side (15).

10. The leveling ramp according to any of claims 1 to 9, **characterized in that** the leveler (1) has side walls (17, 17') and recesses (18, 18') are arranged in these side walls, which recesses extend over the entire height (H) of the leveler (1).

## Revendications

1. Dispositif de nivellement (100) pour un véhicule
comprenant une cale de nivellement (1),
qui comporte un côté rampe (2) avec une surface de rampe (6)
et un côté appui (3) opposé au côté rampe (2) avec une surface d'appui (8)
ainsi qu'au moins une nervure (4, 4') s'étendant entre le côté rampe (2) et le côté appui (3),
**caractérisé en ce que** sur l'extrémité orientée vers le côté rampe (2) de la nervure (4, 4') est prévue au moins une saillie (5, 5') coudée par rapport à la nervure (4, 4').

2. Dispositif de nivellement selon la revendication 1, **caractérisé en ce que** la surface d'appui (8) est conçue partiellement fermée.

3. Dispositif de nivellement selon la revendication 1 ou 2, **caractérisé en ce que** plusieurs nervures (4, 4') et plusieurs saillies (5, 5') sont prévues.

4. Dispositif de nivellement selon la revendication 3, **caractérisé en ce que** le côté rampe (2) comporte plusieurs ouvertures (11, 11', 12, 12').

5. Dispositif de nivellement (100) selon la revendication 4, **caractérisé en ce que** plusieurs ouvertures (12, 12') en forme de losange et plusieurs ouvertures (11, 11') en forme d'étoile délimitées par les saillies (5, 5') du côté rampe (2) sont prévues et ces ouvertures (11, 11', 12, 12') sont agencées de manière à former sur le côté rampe (2) un motif d'étoiles (39) parsemé de losanges (40).

6. Dispositif de nivellement (100) selon l'une quelconque des revendications 1 à 5, **caractérisé en ce que** la cale de nivellement (1) comporte plusieurs marches (13, 13', 13") à des hauteurs différentes (41, 42, 43).

7. Dispositif de nivellement selon la revendication 6, **caractérisé en ce que** les marches (13, 13', 13") sont courbées.

8. Dispositif de nivellement selon l'une quelconque des revendications 1 à 7, **caractérisé en ce que** des éléments (14, 14') pour améliorer l'adhérence sur la surface de rampe (6) sont prévus.

9. Dispositif de nivellement selon l'une quelconque des revendications 1 à 8, **caractérisé en ce que** la cale de nivellement (1) comporte un côté arrière (15), qui est incliné vers le côté rampe (2) et, sur le côté arrière (15), est agencée une poignée (16).

10. Dispositif de nivellement selon l'une quelconque des revendications 1 à 9, **caractérisé en ce que** la cale de nivellement (1) comporte des parois latérales (17, 17') et dans ces parois latérales sont agencés des évidements (18, 18'), qui s'étendent sur toute la hauteur (H) de la cale de nivellement (1).
